(19) Europäisches Patentamt
European Patent Office
Office européen des brevets

(11) EP 2 743 420 A1

(12) **EUROPEAN PATENT APPLICATION**

(43) Date of publication:
18.06.2014 Bulletin 2014/25

(51) Int Cl.:
E04B 1/86 (2006.01)   E04C 2/04 (2006.01)
E04C 2/26 (2006.01)   B32B 5/02 (2006.01)
B32B 13/12 (2006.01)   B32B 13/14 (2006.01)

(21) Application number: 13290133.1

(22) Date of filing: 11.06.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 12.12.2012 EP 12290435

(71) Applicant: Saint-Gobain Placo SAS
92150 Suresnes (FR)

(72) Inventors:
• Hotchin, Glen
Barrow upon Soar, Loughborough LE12 8GS
(GB)
• Jones, Nicholas
Melton Mowbray, Leicestershire LE14 4AL (GB)

(74) Representative: Pugsley, Victoria Antonietta
Chapman Molony
18 Staple Gardens
Winchester SO23 8SR (GB)

(54) **Soundproofing panel**

(57)    A panel for use in building construction comprises a gypsum board having two opposed faces, a polymer-based lamina being provided on one of these faces. The weight per unit area of the panel lies in the range 13.5 to 17.5 kg/m$^2$, and the thickness of the panel lies in the range 11-25 mm.

Fig. 5

**Description**

The present invention relates to a laminated building panel with improved acoustical soundproofing properties

It is well-known to form acoustic building panels for walls, ceilings, floors and the like by laminating together two or more substrate layers. One such building panel is disclosed in WO2008/124672 and comprises a pair of plasterboard substrate layers, for example of gypsum, which are bonded together with an acrylic glue.

Surprisingly, it has been found that it is not necessary for soundproofing panels to be formed from boards of the same thickness. In fact, acoustic performance may also be improved by providing a thinner backing lamina on the back of a substrate board.

Furthermore, by selecting a polymer-based backing lamina, the backing lamina may also serve the purpose of reinforcing the substrate board, such that fixtures (such as sinks, televisions, radiators, fire extinguishers, shelves and any other item that requires attachment to the panel) may be attached more securely to the panel.

In addition, the use of a polymer-based backing lamina tends to reduce the overall weight of the soundproofing panel, thus enabling the panel to be handled with greater ease and safety. This may make it easier to comply with regulations relating to manual handling.

Therefore, in a first aspect, the present invention may provide a panel for use in building construction, the panel comprising a gypsum board having two opposed faces, a polymer-based lamina being provided on one of the faces of the gypsum board

wherein the weight per unit area of the panel lies in the range 13.5 to 17.5 kg/m$^2$, and the thickness of the panel lies in the range 11-25 mm.

If the weight per unit area is greater than the stated range, then manual handling properties of the panel may be adversely affected. If the weight per unit area is less than the stated range, then there may be little advantage to the provision of an additional layer on the face of the gypsum board: that is, it has been found that the soundproofing properties of the panel are not significantly better than those of a gypsum board having an equivalent thickness.

Typically, the faces of the gypsum board each have an area in the range 2-4 m$^2$, preferably in the range 2.5-3.5 m$^2$.

The lamina represents a layer that provides a discrete component of the panel, that is, it is not integrally formed with the gypsum board. Effectively, there is a well-defined interface or boundary between the gypsum board and the lamina.

Preferably, the polymer-based lamina comprises principally a thermoplastic polymer. Alternatively, the polymer-based lamina may comprise principally a thermosetting polymer.

The polymer-based lamina may be provided by a monolithic polymer, that is, a unitary, non-composite material. Alternatively, the polymer-based lamina may be provided by a composite material, for example, a fibre-reinforced polymer, such as fibreglass. Preferably, fibreglass has a polyester or polypropylene matrix. In certain cases, the fibreglass has an epoxy matrix.

Typically, the gypsum board comprises gypsum plaster extruded between two paper or glass fibre sheets.

Typically, the polymer-based lamina is glued to the gypsum board. In general, the layer of glue is very thin, such that the gap between the polymer-based lamina and the gypsum board is less than 0.3 mm, preferably less than 0.2 mm, more preferably less than 0.1 mm.

Typically, the lamina has a thickness of at least 0.25 mm, preferably at least 0.5 mm, more preferably at least 1 mm. Such thickness may provide the necessary stiffness to the lamina, such that it can improve the fixing strength of the panel.

Typically, the thickness of the lamina is less than 5 mm, preferably less than 4 mm, more preferably less than 2.5 mm. Preferably, the thickness of the polymer-based lamina is less than 25% of the thickness of the gypsum board, more preferably less than 20%.

A typical panel may comprise a gypsum plasterboard of 10-20 mm thickness Typically, the lamina is solid and non-porous. This may assist in providing the lamina with the necessary stiffness to improve the fixing strength of the panel. The phrase "solid and non-porous" is intended to exclude laminae that comprise a 3-dimensional porous array. The phrase is not intended to exclude laminae that have apertures, cut-outs, or perforations extending through the thickness of the lamina. For example, it is envisaged that the lamina may include a 2-dimensional distribution of through-thickness apertures.

In general, the polymer-based lamina is selected from the group comprising: polyvinylchloride, HDPE, polypropylene, and fibreglass.

Typically, the density of the polymer-based lamina is in the range 700-1500 kg/m$^3$.

In general, the modulus of elasticity of the polymer-based lamina is at least 500 MPa, preferably at least 750 MPa, more preferably at least 900 MPa.

Typically, the sound reduction index of a partition wall formed from two of the panels, when measured at a frequency between 1600 and 5000 Hz, is at least 5 dB greater than that of a partition wall formed from two notional panels having an equivalent mass per unit area to the panel of the invention, the notional panels each comprising solely a gypsum board.

In a second aspect, the present invention may provide a panel for use in building construction, the panel comprising a gypsum board having two opposed faces, a polymer-based lamina being provided on one of the faces of the gypsum board,

wherein the sound reduction index of a partition wall formed from two of the panels, when measured at a frequency between 1600 and 5000 Hz, is at least 5 dB greater than that of a partition wall formed from two notional panels having an equivalent mass per unit area to the panel of the invention, the notional panels each comprising solely the material of the substrate board.

The second aspect of the invention may include one or more of the optional features of the first aspect of the invention.

The invention will now be described by way of example with reference to the following Figures in which:

Figure 1 is a graph of sound attenuation vs. frequency for a) measured results for Example 1; and b) calculated results for Example 1

Figure 2 is a graph of sound attenuation vs. frequency for a) measured results for Example 2; and b) calculated results for Example 2

Figure 3 is a graph of sound attenuation vs. frequency for a) measured results for Example 3; and b) calculated results for Example 3

Figure 4 is a graph of sound attenuation vs. frequency for a) measured results for Example 4; and b) calculated results for Example 4

Figure 5 is a graph of sound attenuation vs. frequency for a) measured results for Example 5; and b) calculated results for Example 5

Figure 6 is a graph of damping factor against weight per unit area for Examples 6-9 and Comparative Examples 1-2.

Examples

Panels were prepared by gluing a lamina to a gypsum plasterboard using Aquagrip™ 29860 glue. Details of the plasterboard and lamina are set out in Table 1:

**Table 1**

| Example | Plasterboard | Lamina |
|---|---|---|
| Example 1 | 15 mm thick Duraline™ | 1.8 mm thick FCG180 fibreglass sheet from Crane Composites |
| Example 2 | 15 mm thick Duraline™ | 2 mm thick PVC sheet |
| Example 3 | 15 mm thick Duraline™ | 2 mm thick HDPE sheet |
| Example 4 | 15 mm thick Duraline™ | 2 mm thick polypropylene sheet |
| Example 5 | 12.9 mm thick Fireline™ | 1.8 mm thick FCG180 fibreglass sheet from Crane Composites |
| Example 6 | Gypsum board + epoxy composite lamina: total thickness = 15mm | |
| Example 7 | Gypsum board + polypropylene / non-woven glass composite lamina: total thickness = 15mm | |
| Example 8 | Gypsum board + polyester / non-woven glass composite lamina: total thickness = 15mm | |
| Example 9 | Gypsum board + vinyl acetate lamina: total thickness = 15mm | |
| Comparative Example 1 | Gypsum board + LDPE foam lamina: total thickness = 16mm | |
| Comparative Example 2 | Gypsum board | |

**Acoustic testing**

Acoustic testing was carried out according to BS EN ISO140-3:1995.

A test specimen was constructed in an aperture having an overall opening 2400 mm high by 3600 mm wide, to provide a partition wall between a source room and a receiving room.

The test specimen was prepared by constructing a framework comprising floor and ceiling channels fixed to the base and head of the test aperture respectively, and studs extending between the floor and ceiling channels at each end of the aperture and at intervals therebetween. The framework was clad on each side with a single layer of the panel being tested, the panel being oriented such that the lamina faced into the interior of the test specimen.

A loudspeaker was positioned in the source room, and a rotating microphone boom in the receiving room measured the average sound pressure level transmitted through the test specimen.

Test curves were obtained for sound absorption for frequencies from 50 Hz to 5000 Hz.

**Calculations**

From sound attenuation tests carried out on unclad Duraline and Fireline boards, theoretical sound attenuation curves were calculated for each of Examples 1-5. These were based on the sound attenuation that would be expected from a board whose mass is increased by an amount corresponding to the mass of the respective lamina. The following formula was used to calculate the expected sound attenuation:

$$\text{Expected } SA_{B+L} = \text{Measured } SA_B + 25 * \log_{10}[(m_B + m_L)/(m_B)]$$

wherein:

$$\text{Expected } SA_{B+L} = \text{expected sound attenuation for board + lamina [dB]}$$

$$\text{Measured } SA_B = \text{measured sound attenuation for board alone [dB]}$$

$$m_B = \text{mass of board}$$

$$m_L = \text{mass of lamina}$$

The coefficient of 25 has been derived empirically for single layer, double leaf constructions.

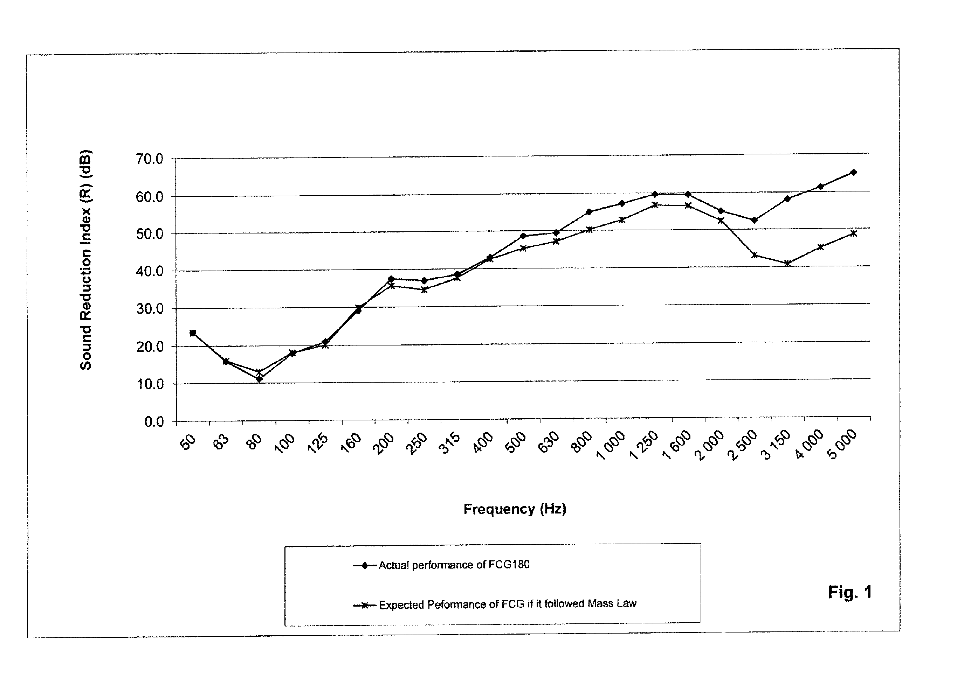

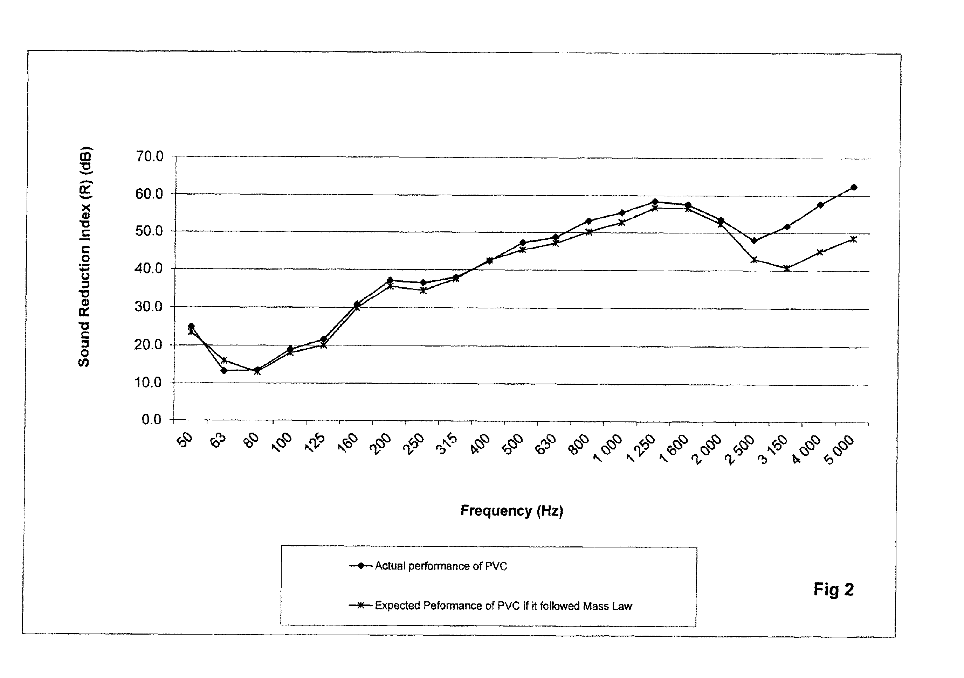

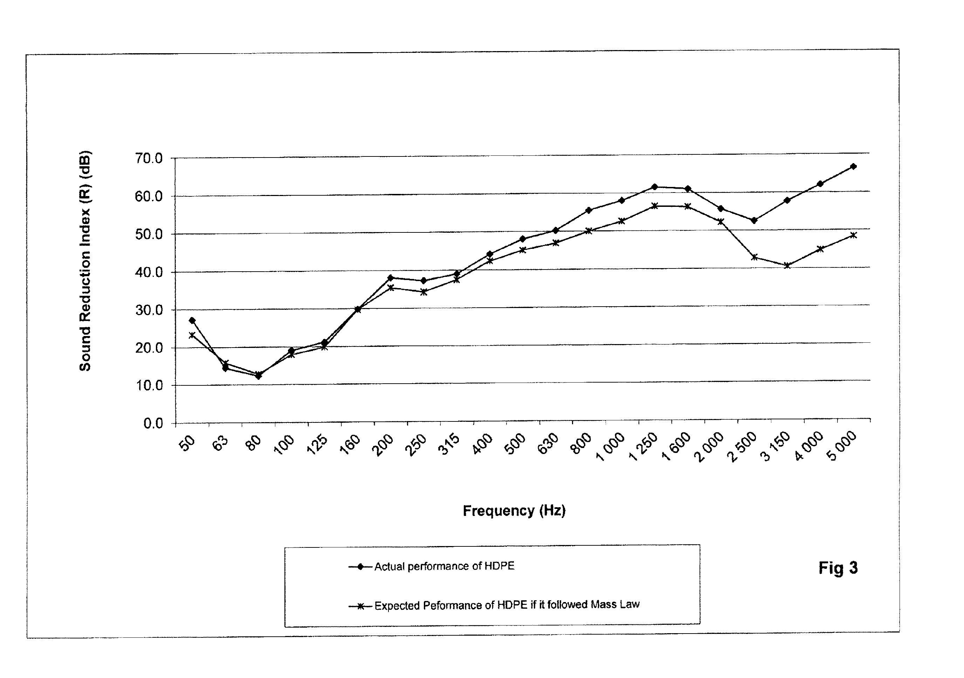

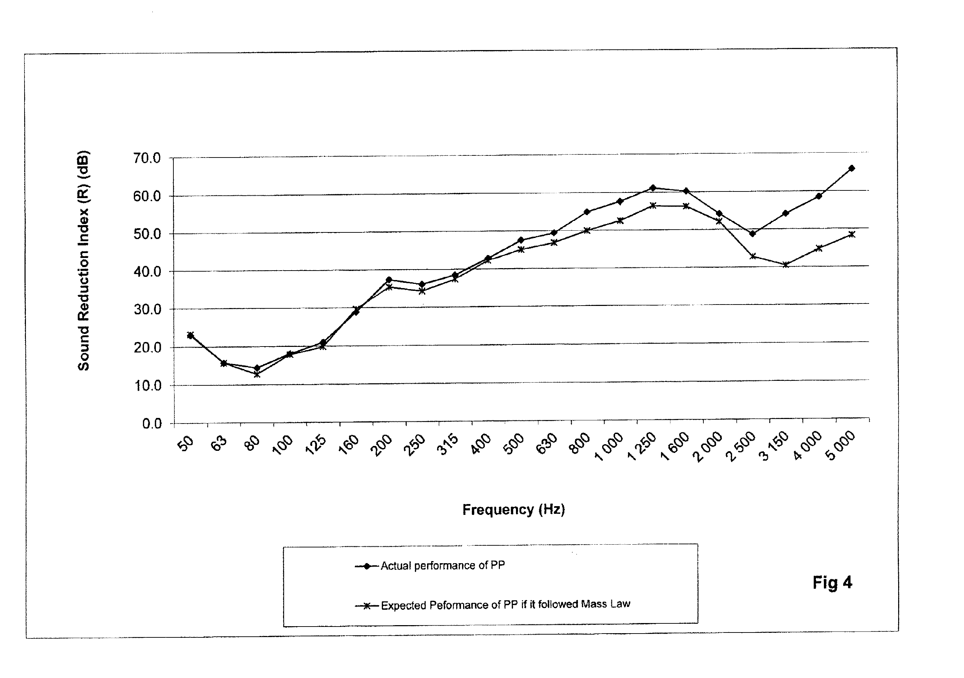

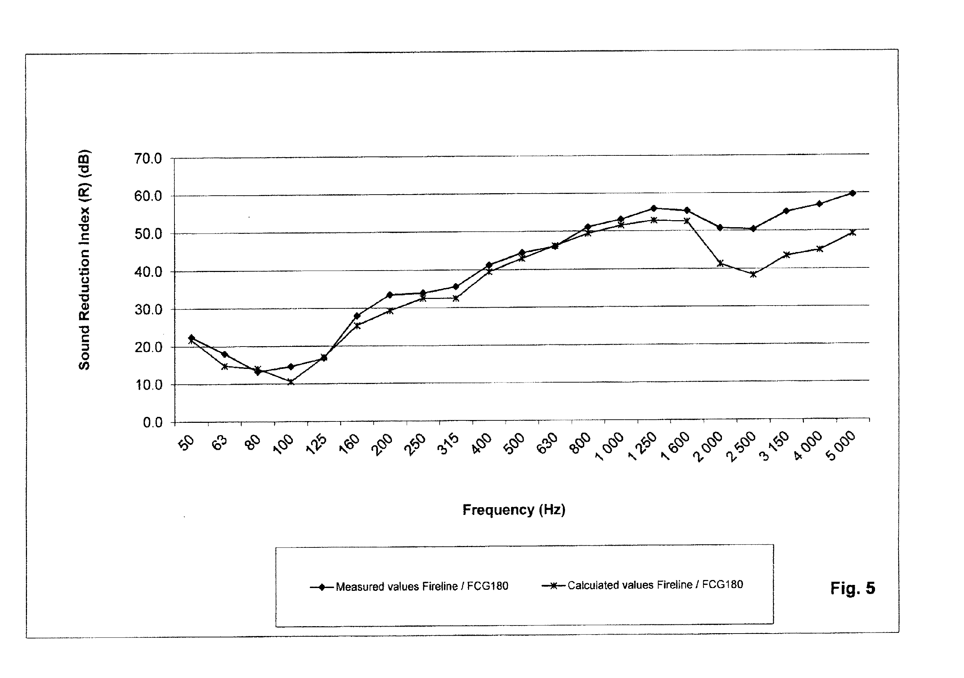

Figures 1-5 show curves for measured and calculated sound attenuation for Examples 1-5. The actual measurements are typically greater than the calculated values at equivalent frequency, particularly at frequencies greater than about 2000 Hz.

**Damping factor**

The damping factor of the panels was measured using an Impulse Excitation technique. The panel was supported at two nodal points and caused to vibrate by an automated tapping device. The vibration signal emitted by the sample was captured using a microphone, and the damping factor calculated using the following equation:

$$Q^{-1} = \frac{1}{\pi}\left(\frac{x_n}{x_{n+1}}\right)$$

wherein $Q^{-1}$ = damping factor

$x_n$ = signal amplitude at cycle number n $x_{n+1}$ = signal amplitude at cycle number n+1

The damping factor was measured at the resonant frequency for the respective panel.

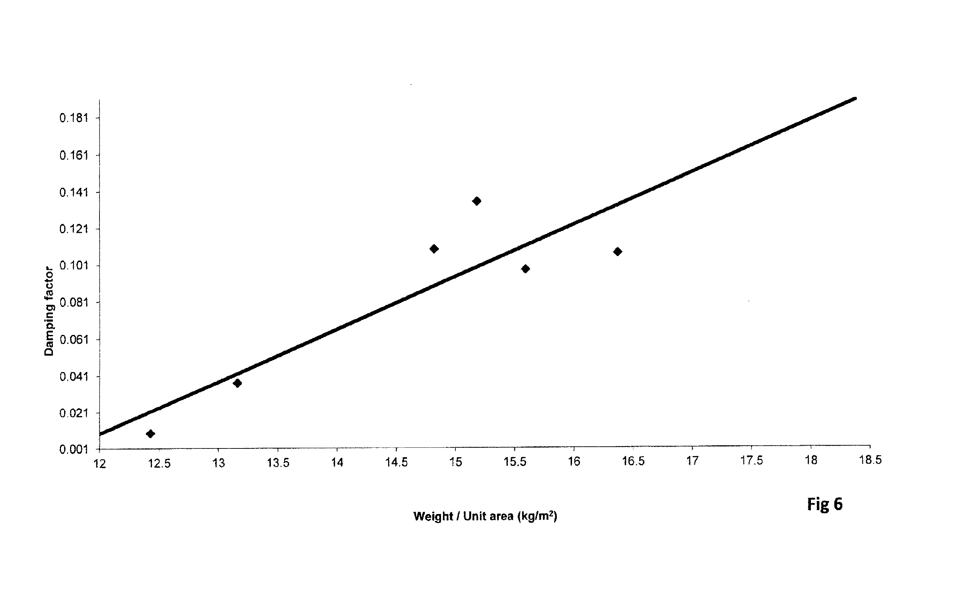

The results are set out in Table 2 and illustrated in Figure 6.

**Table 2**

| Sample | Mass per unit area (kg/m$^2$) | Resonant frequency (Hz) | Damping factor |
|---|---|---|---|
| Example 6 | 15.59 | 944 | 0.098 |
| Example 7 | 14.82 | 1250 | 0.11 |
| Example 8 | 15.18 | 260 | 0.14 |
| Example 9 | 16.37 | 167.5 | 0.11 |
| Comparative Example 1 | 13.16 | 743 | 0.037 |
| Comparative Example 2 | 12.43 | 840 | 0.0094 |

**Claims**

1. A panel for use in building construction, the panel comprising a gypsum board having two opposed faces, a polymer-based lamina being provided on one of the faces of the gypsum board,
wherein the weight per unit area of the panel lies in the range 13.5 to 17.5 kg/m$^2$, and the thickness of the panel lies in the range 11-25 mm.

2. A panel according to claim 1, wherein the polymer-based lamina is either a monolithic polymer or a composite having a polymer matrix.

3. A panel according to claim 2, wherein the polymer-based lamina is provided by a fibre-reinforced polymer.

4. A panel according to any one of the preceding claims, wherein the polymer-based lamina is provided by thermoplastic polymer.

6. A panel according to any one of the preceding claims, wherein the polymer-based lamina is glued to the gypsum board.

7. A panel according to any one of the preceding claims, wherein the thickness of the polymer-based lamina is less than 20% of the thickness of the gypsum board.

8. A panel according to any one of the preceding claims, wherein the thickness of the polymer-based lamina is less than 5mm.

9. A panel according to claim 1, wherein the polymer-based lamina is selected from the group comprising: polyvinylchloride, HDPE, and polypropylene.

10. A panel according to claim 1, wherein the polymer-based lamina comprises a glass-reinforced polymer.

11. A panel according to any one of the preceding claims, wherein the density of the polymer-based lamina is in the range 700-1500 kg/m$^3$.

12. A panel according to any one of the preceding claims, wherein the Modulus of Elasticity of the polymer-based lamina at least 500 MPa.

13. A panel according to any one of the preceding claims, wherein the sound reduction index of a partition wall formed from two of the panels, when measured at a frequency between 1600 and 5000 Hz, is at least 5 dB greater than that of a partition wall formed from two notional panels having an equivalent mass per unit area to the claimed panel, the notional panels each comprising solely a gypsum board.

14. A panel for use in building construction, the panel comprising a gypsum board having two opposed faces, a polymer-based lamina being provided on one of the faces of the gypsum board,
wherein the sound reduction index of a partition wall formed from two of the panels, when measured at a frequency between 1600 and 5000 Hz, is at least 5 dB greater than that of a partition wall formed from two notional panels having an equivalent mass per unit area to the claimed panel, the notional panels each comprising solely the material of the substrate board.

Fig. 1

Fig 2

Fig 3

Fig 4

Fig. 5

Fig 6

Weight / Unit area (kg/m²)

Europäisches
Patentamt

European
Patent Office

Office européen
des brevets

**EUROPEAN SEARCH REPORT**

Application Number

EP 13 29 0133

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CSTB [FR]: "Document Technique d'Application : KNAUF BA25-BA18", , 28 July 2010 (2010-07-28), XP055085877, Retrieved from the Internet: URL:http://www.cstb.fr/pdf/atec/GS09-J/AJ0 90884_V1.pdf [retrieved on 2013-10-29] * pages 4,5, paragraph 4.5; tables 4,5 * * page 8, paragraph 10.4 * ----- | 1-4,6-14 | INV. E04B1/86 E04C2/04 E04C2/26 B32B5/02 B32B13/12 B32B13/14 |
| X<br>A | EP 1 251 215 A2 (G P GYPSUM CORP [US]) 23 October 2002 (2002-10-23) * paragraph [0023] - paragraph [0066]; figures 1-3 * ----- | 14<br>1-4,6-13 | |
| X<br>A | US 3 350 257 A (HOURIGAN DANIEL P ET AL) 31 October 1967 (1967-10-31) * column 1, line 66 - column 2, line 64; figure 1 * ----- | 14<br>1-4,6-13 | |
| X<br>A | GB 1 489 825 A (PROCTOR & CO A) 26 October 1977 (1977-10-26) * page 1, line 37 - page 2, line 22; figure 1 * ----- | 14<br>1-4,6-13 | TECHNICAL FIELDS SEARCHED (IPC) E04B E04C B32B |

The present search report has been drawn up for all claims

| Place of search | Date of completion of the search | Examiner |
|---|---|---|
| The Hague | 4 November 2013 | Couprie, Brice |

EPO FORM 1503 03.82 (P04C01)

## ANNEX TO THE EUROPEAN SEARCH REPORT
## ON EUROPEAN PATENT APPLICATION NO.

EP 13 29 0133

This annex lists the patent family members relating to the patent documents cited in the above-mentioned European search report.
The members are as contained in the European Patent Office EDP file on
The European Patent Office is in no way liable for these particulars which are merely given for the purpose of information.

04-11-2013

| Patent document cited in search report | | Publication date | Patent family member(s) | | Publication date |
|---|---|---|---|---|---|
| EP 1251215 | A2 | 23-10-2002 | AU | 784267 B2 | 02-03-2006 |
| | | | AU | 2766202 A | 24-10-2002 |
| | | | CA | 2377518 A1 | 19-10-2002 |
| | | | EP | 1251215 A2 | 23-10-2002 |
| | | | JP | 4323754 B2 | 02-09-2009 |
| | | | JP | 2003025502 A | 29-01-2003 |
| | | | MX | PA02003852 A | 14-07-2003 |
| | | | US | 2002155282 A1 | 24-10-2002 |
| | | | US | 2003203191 A1 | 30-10-2003 |
| US 3350257 | A | 31-10-1967 | NONE | | |
| GB 1489825 | A | 26-10-1977 | NONE | | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2008124672 A